Europäisches Patentamt

European Patent Office

Office européen des brevets

(19)

(11) EP 1 566 823 A1

(12) **EUROPEAN PATENT APPLICATION**
published in accordance with Art. 158(3) EPC

(43) Date of publication:
24.08.2005 Bulletin 2005/34

(51) Int Cl.⁷: **H01J 1/30**, H01J 29/04,
H01J 31/12

(21) Application number: 03774189.9

(22) Date of filing: 25.11.2003

(86) International application number:
PCT/JP2003/014980

(87) International publication number:
WO 2004/049372 (10.06.2004 Gazette 2004/24)

(84) Designated Contracting States:
AT BE BG CH CY CZ DE DK EE ES FI FR GB GR
HU IE IT LI LU MC NL PT RO SE SI SK TR

(30) Priority: 25.11.2002 JP 2002341299

(71) Applicants:
• Toshiba Carrier Corporation
Tokyo 105-8001 (JP)
• FUJI PIGMENT CO., LTD.
Hyogo-ken 666-0015 (JP)

(72) Inventors:
• Ito, Takeo, Intel. Prop. Div., Toshiba Corp.
Tokyo 105-8001 (JP)

• Matsuda, Hidemi, Intel. Prop. Div., Toshiba Corp.
Tokyo 105-8001 (JP)
• Inamura, Masaaki, Intel. Prop. Div., Toshiba Corp
Tokyo 105-8001 (JP)
• Tanaka, Hajime, Intel. Prop. Div., Toshiba Corp.
Tokyo 105-8001 (JP)
• Sakai, Kazuo
Kawanishi-shi, Hyogo 666-0142 (JP)

(74) Representative: HOFFMANN EITLE
Patent- und Rechtsanwälte
Arabellastrasse 4
81925 München (DE)

(54) **ELECTRON SOURCE DEVICE AND DISPLAY**

(57) An electron source device includes a porous layer (for example, porous alumina layer) which is composed of an insulator and has many microscopic holes provided in a direction perpendicular to a main surface, and first and second conductor layers placed on both sides of the porous layer, and is **characterized in that** the current density I/S is 1 μA/cm² or higher when a direct-current voltage is applied between the second conductor layer and the fist conductor layer while using the second conductor layer as an anode. In this case, S represents the overlapping area of the first conductor layer, the second conductor layer and the porous layer. Consequently, an electron source device having a high electron emission ability and a long life even when the degree of vacuum is low can be obtained at low cost, and hence, a display having a high luminous efficiency and high reliability can be realized.

## FIG.1

EP 1 566 823 A1

**Description**

Technical Field

The present invention relates to an electron source device and a display device including the electron source device.

Background Art

In recent years, as a flat image display unit, development of a field emission display (hereinafter, referred to as an FED) has been furthered. The FED has a face plate and a rear plate disposed to be opposed to each other with a predetermined space held therebetween, phosphor layers of three colors are formed on an inner surface of the faceplate, and an electron emission source for emitting the electrons which excite these phosphors is provided on the inner surface of the rear plate.

As the electron emission source of the FED, a structure called Spindt type has been conventionally proposed. This electron emission source has the structure in which an electric field is concentrated on an acuminate portion of an electron emission part formed of molybdenum (Mo), and electrons are emitted from the electron emission part by voltage applied to the phosphor layer. By using this method, a thin flat display is realized.

However, the aforementioned electron emission source has a very fine structure, and it is extremely difficult to form a number of electron emission sources uniformly and simply. Accordingly, there is not only the problem that producing a large flat display is difficult, but also the problem that the manufacturing cost of even the flat display of a compact screen becomes high. Difference in the electron emission performance occurs due to a small difference in the shape of the electron emission source, and therefore, it is difficult to obtain stable images.

Recently, there is proposed the structure in which a carbon nanotube (CN) is formed in a microscopic pore (nanohole) with a diameter of several nm to several hundreds nm that is formed by anodic oxidation of aluminum (Al) (for example, see Displays 21 (2000) p99 to 104).

However, in the electron emission source with such a structure, there are many problems in practical use such as the problem of the life of the CN becoming short because an intratubal gas contaminates the CN when the degree of vacuum inside the tube is low as well as the problem of the CN being expensive.

The present invention is made to solve these problems, and has its object to provide an electron source device which is high in electron emission performance and less expensive, and can with stand use for a long period of time even at a low degree of vacuum, and a display which includes such an electron source device, with high emission efficiency at low cost with high reliability.

Disclosure of the Invention

A first aspect of the present invention is an electron source device comprising a porous layer composed of an insulator, and having a number of microscopic holes placed in a perpendicular direction to a main surface, and a first conductor layer and a second conductor layer respectively placed on both surface sides of the porous layer, and characterized in that a current density I/S when a direct-current voltage is applied between the second conductor layer and the first conductor layer with the second conductor layer as an anode is in a range shown as follows:

$$1 \ \mu A/cm^2 \leq I/S$$

(where I represents a current value flowing between the first conductor layer and the second conductor layer, S represents an area of a part where three layers that are the first conductor layer, the second conductor layer and the porous layer overlap in a thickness direction.)

A second aspect of the present invention is an electron source device comprising a porous layer composed of an insulator, and having a number of microscopic holes placed in a perpendicular direction to a main surface, and a 0first conductor layer and a second conductor layer respectively placed on both surface sides of the porous layer, and characterized in that end portions of at least one side of the microscopic holes of the porous layer and the first conductor layer or second conductor layer are separated by a barrier layer composed of a dielectric, and a current density I/S when a direct-current voltage is applied between the second conductor layer and the first conductor layer with the second conductor layer as an anode is in a range shown as follows:

$$1 \ \mu A/cm^2 \leq I/S$$

(where I represents a current value flowing between the first conductor layer and the second conductor layer, S represents an area of a part where three layers that are the first conductor layer, the second conductor layer and the porous layer overlap in a thickness direction.)

A third aspect of the present invention is a display device comprising a first substrate and a second substrate placed to be opposed to each other, a phosphor layer formed on an inner surface of the first substrate, and an electron source provided on an inner surface side of the second substrate and including an electron source emitting electrons exciting the phosphor layer, and characterized in that the electron source is any one of the electron source devices described above.

In the electron source device of the first aspect of the present invention, the first conductor layer is placed on one main surface of the porous layer composed of an insulator and the second conductor layer is placed on the other main surface, and when the direct-current voltage is applied between the second conductor layer and the first conductor layer with the second conductor layer as an anode, the electric field occurs in the microscopic holes of the porous layer, whereby electrons move in the direction toward the second conductor layer from the first conductor layer. Then, when the I/S that is the density of the current flowing between the first conductor layer and the second conductor layer is 1 $\mu$A/cm$^2$ or more, electrons penetrate through the second conductor layer and are emitted toward, for example, the phosphor layer outside, in some of the microscopic holes of the porous layer.

In the electron source device of the second aspect, the first conductor layer is placed on one main surface of the porous layer composed of an insulator and the second conductor layer is placed on the other main surface. The end portions at least one sides of the microscopic holes of the aforesaid porous layer, and the first conductor layer or the second conductor layer are separated by the barrier layer composed of the dielectric, and therefore, when the direct-current voltage is applied between the second conductor layer and the first conductor layer with the second conductor layer as an anode, an electric field occurs in the microscopic holes of the porous layer. This electric field concentrates on the barrier layer, and the electrons (tunnel electrons) are emitted. The moving direction of the electrons is the direction toward the second conductor layer from the first conductor layer. When the I/S that is the density of the current flowing between the first conductor layer and the second conductor layer is 1 $\mu$A/cm$^2$ or more, the tunnel electrons penetrate through the second conductor layer and are emitted toward the external phosphor layer, in at least some of the microscopic holes of the porous layer.

According to the above present invention, the electron source device which is uniform and high in the electron emission performance is obtained. Since direct contact of the electron emission portion and the atmospheric gas is avoided, deterioration of the electron emission portion due to contamination hardly occurs, and long life is achieved.

Brief Description of Drawings

Fig. 1 is a sectional view showing a first embodiment of an electron source device according to the present invention.
Fig. 2 is a sectional view showing a second embodiment of the electron source device of the present invention.
Fig. 3 is a sectional view showing a third embodiment of the electron source device of the present invention.
Fig. 4 is a sectional view showing a fourth embodiment of the electron source device of the present invention.
Fig. 5 is a sectional view showing a fifth embodiment of the electron source device of the present invention.
Fig. 6 is a sectional view showing a sixth embodiment of the electron source device of the present invention.
Fig. 7 is a graph showing the electron emission characteristic of the electron source devices of the first to the sixth embodiments.
Fig. 8 is a sectional view schematically showing a structure of an FED including the electron source device of the first embodiment.
Fig. 9 is a sectional view showing a structure of the electron sources of specimens No. 1 to 23, in an example of the present invention.
Fig. 10 is a sectional view showing a structure of the electron sources of specimens No. 24 to 29, in an example of the present invention.
Fig. 11 is a view schematically showing a method for investigating the characteristics of the display including the electron source, in the example of the present invention.

Best Mode for Implementing the Invention

Next, embodiments of the present invention will be explained based on the drawings. The present invention is not limited to the following embodiments.

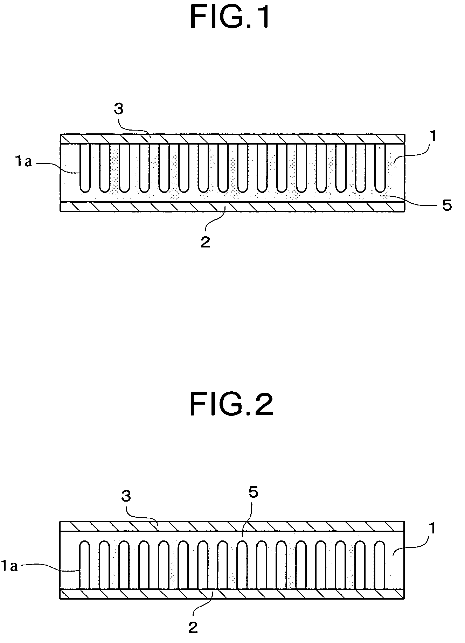

Figs. 1 to 6 are sectional views respectively showing schematic constructions of first to sixth embodiments of the present invention.

The electron source devices of the first to the sixth embodiments have a porous layer 1 composed of an insulator, and including a number of microscopic holes (nanoholes) 1a with the diameter in the order of nanometer (nm).

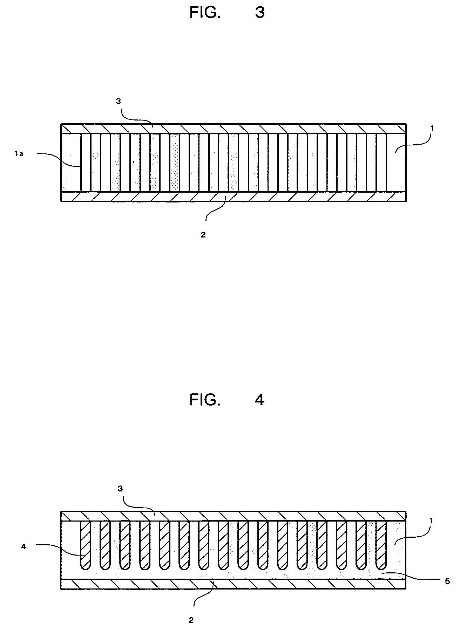

A number of nanoholes 1a are provided to extend in the direction along the thickness direction, namely, the perpendicular direction to the main surface, and have openings at one main surface side of the porous layer 1, for example, on the side of the upper surface. As shown in Fig. 2, a number of nanoholes 1a may have openings on the side of the lower surface. As shown in Fig. 3, the nanohole 1a may be a through-hole having an opening at both upper and lower surfaces.

It is desirable to set the diameter of the nanohole 1a at 5 nm to 1000 nm. Too large diameter of the nanohole 1a is not preferable because concentration of an electric field becomes weak and the start voltage of electron emission becomes high. On the other hand, when the diameter of the nanohole 1a is too small, it is difficult to form the hole.

As a porous insulator having such nanoholes 1a, porous alumina (aluminum oxide) can be cited. By anodic oxidization (anodization) of the layer with aluminum as a main component, for example, a porous alumina layer in which a number of nanoholes are regularly arranged with microscopic spaces from each other can be formed. The porous alumina layer can be formed by other methods than anodic oxidization.

As the porous layer 1, it is also possible to use a titanium oxide layer having a number of nanoholes, which is formed by anodic oxidization of a titanium (Ti) layer. Further, as the porous layer 1, the oxide layers of the respective metals which are formed by anodizing tantalum (Ta), niobium (Nb), vanadium (V), zirconium (Zr), molybdenum (Mo), hafnium (Hf), tungsten (W) and the like can be used.

It is desirable to set the thickness of the porous layer 1 at 0.05 $\mu$m to 50 $\mu$m, and it is more preferable to set it at 0.1 $\mu$m to 20 $\mu$m.

A first conductor layer 2 is placed on an undersurface of the porous layer 1. As the conductor constructing the first conductor layer 2, metals such as Al, Ag, Cu, Ni, Au and Ba, carbon and the like can be cited.

In the porous layer 1, a second conductor layer 3 to be a gate electrode is formed on a surface at an opposite side from the surface on which the first conductor layer 2 is formed, directly or via a barrier layer that will be described later. As a conductor which constructs the second conductor layer 3, carbon, Al, Ag, Cu, Ni, Au, Ba and the like can be cited as the conductor which constructs the first conductor layer 2.

It is possible to form the second conductor layer 3 by various methods such as vapor deposition, sputtering, and electric field deposition. For example, formation of an Au layer can be performed by the method such as vapor deposition and sputtering. The Al layer can be formed by a vapor deposition method, and the Ag layer can be formed by an electric field deposition method.

At least one of the first conductor layer 2 and the second conductor layer 3 can have a multilayered structure in which a number of conductor layers are stacked.

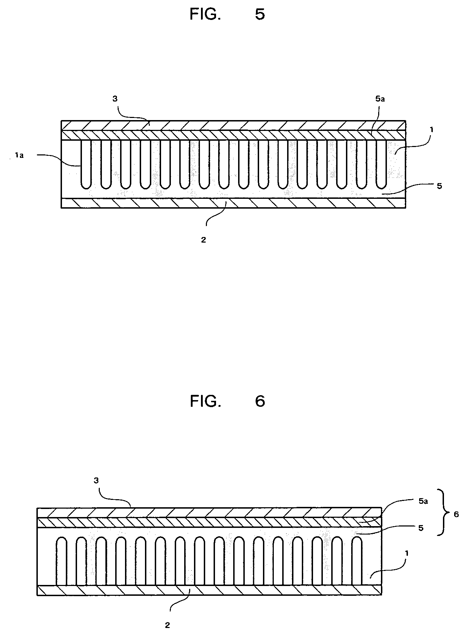

In the first to the third embodiments, an inside of the nanohole 1a of the porous layer 1 is a cavity portion, but as shown in Fig. 4 which is the fourth embodiment, a layer 4 composed of a conductor or a semiconductor may be formed. As this conductor or semiconductor layer 4, any conductor or semiconductor may be adopted as long as it electrically contacts the first conductor layer 2 or the second conductor layer 3 at the opening of the nanohole 1a, and can secure electrical connection inside the nanohole 1a up to the barrier layer which will be described later, and it may be attached/formed at a part or all of the inner wall surface of the nanohole 1a, or may be embedded to fill a part or all of the inside of the nanohole 1a.

As a material which constructs the conductor or semiconductor layer 4, any kind of material can be used as long as it has conductivity to some extent. For example, conductive materials such as carbon, Al, Ag, Cu, Ni, Au and Ba can be used. Semiconductor materials such as an Ni oxide, ATO, and ITO can be used. These conductor or semiconductor layer can be formed by, for example, an electrochemical method, a CVD method, vapor deposition method or the like.

As shown in Figs. 1, 2 and 4, a barrier layer 5 which is composed of a dielectric, is provided on a surface at an opposite side from the opening of the nanohole 1a of the porous layer 1. As the barrier layer 5, a layer composed of the same material as the insulator which constructs the porous layer 1 is used. For example, an aluminum oxide (alumina) layer which is formed by anodic oxidation of aluminum can be used and a bottom end portion of the nanohole 1a, the first conductor layer 2 or the second conductor layer 3 can be constructed to be separated by the barrier layer 5 composed of the same alumina as the insulator having the nanohole 1a.

As shown in Fig. 3, in the structure having a through-hole with openings at both upper and lower surfaces, the first conductor layer 2 and the second conductor layer 3 are directly formed at both surfaces of the porous layer 1 without the barrier layer 5, emission of electrons is also obtained with the structure.

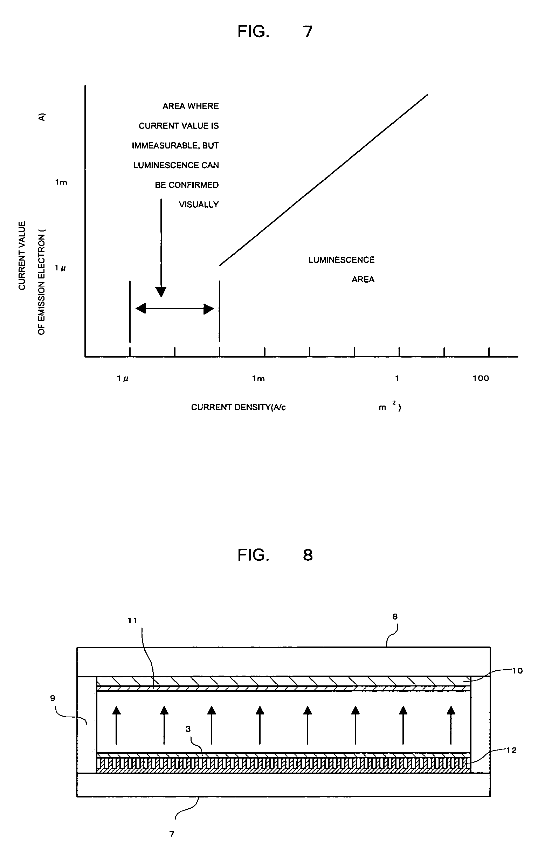

As shown in Fig. 5, a second barrier layer 5a composed of a dielectric may be formed on the surface at the side of the opening of the nanohole 1a of the porous layer 1. Further, the barrier layer may have the structure in which two or more dielectric layers are layered. For example, as shown in Fig. 6, a second barrier layer 5a composed of one, or two or more layers of another dielectric is layered and formed on the barrier layer (first barrier layer) 5 composed of alumina formed by anodic oxidation of aluminum to make a barrier layer 6 with a multilayered structure.

As the dielectric which constructs the first barrier layer 5 or the second barrier layer 5a, the kind of dielectric is not especially limited, but the one which is high in dielectric constant and favorable in withstand voltage property is preferable. A tantalum pentoxide, a silicon nitride, a titanium oxide, silica and the like can be used other than the aforesaid aluminum oxide (alumina) which is formed by anodic oxidation of aluminum.

In the first to the sixth embodiments having such a structure, electrons jumps out by applying direct-current voltage with the first conductor layer 2 as a cathode (negative electrode) and the second conductor layer 3 as an anode (positive electrode), and the density (I/S) of the current I by the emitted electrons is 1 $\mu A/cm^2$ or higher, preferably 100 $mA/cm^2$ or lower. S denotes an area of the portion where the three layers of the first conductor layer 2, the second conductor layer 3 and the porous layer 1 overlap in the thickness direction.

A mechanism which emits electrons is considered as described below. The porous layer 1 exists between the first conductor layer 2 and the second conductor layer 3, and the porous layer 1 is composed of the cavity portion (nanohole) and the dielectric (insulator). Therefore, when direct-current voltage is applied between the first conductor layer 2 and the second conductor layer 3, an electric field concentrates in the nanohole 1a, and a flow (movement) of electrons from one conductor layer toward another conductor layer (positive electrode side) occurs. A part of electrons flowing at this time is accelerated by the electric field in the nanohole 1a, and penetrates through the conductor layer at the positive electrode side, whereby the electrons are emitted outside.

The value of the current density (I/S) due to the flow of the aforesaid electrons can be controlled by changing the thickness of the porous layer 1, the diameters of the nanoholes 1a of the porous layer 1, the content of the nanoholes 1a, the conductivity and the filling factor when the conductor or semiconductor layer 4 is formed in each of the nanoholes 1a, and the thickness, the dielectric constant of the dielectric and the like when the barrier layers 5 and 5a composed of the dielectric are formed.

The preferable range of the aforesaid current density (I/S) was obtained as a result that the inventors repeated the experiments. When the first conductor layer 2 was made the reference electrode, the second conductor layer 3 was made the gate electrode, and voltage (positive voltage) was applied between these electrodes, when the current density (I/S) of the electrons emitted by the electric field occurring in the nanoholes 1a of the porous layer 1 was controlled to be 1 $\mu A/cm^2$ or higher, and preferably 100 $mA/cm^2$ or lower, it was confirmed that the electrons (tunnel electrons) moved in the direction toward the second conductor layer 3 from the first conductor layer 2 through some of the nanoholes 1a, and the electrons penetrated through the second conductor layer 3 and were emitted toward, for example, an external phosphor layer.

The result of investigating the electron emission characteristic by changing the voltage (positive voltage) which is applied between the first conductor layer 2 and the second conductor layer 3 in the electron source devices of the first to the sixth embodiments is shown in Fig. 7.

From this graph, it is found out that the electron emission characteristic of the electron source device depends on the density of the current (I/S) flowing between the first conductor layer 2 and the second conductor layer 3. Additionally, it is found out that the current density (I/S) has to be 1 $\mu A/cm^2$ or higher in order that the electron emission is performed from the electron source to the outside. If the current density (I/S) exceeds 100 $mA/cm^2$, it is not preferable because there is the possibility of damaging the electron source due to dielectric breakdown. Accordingly, it is preferable to operate such an electron source device with the current density (I/S) of 100 $mA/cm^2$ or lower.

Further, when the electron emission amount of the electron source device is controlled by the voltage applied between the first conductor layer 2 and the second conductor layer 3, it is preferable that the current density (I/S) is 1 $\mu A/cm^2$ or higher at low voltage of 100 V or lower, and it is more preferable that the current density (I/S) is 1 $\mu A/cm^2$ or higher at 50 V or lower.

Since this relationship depends on the current density (I/S), the voltage applied between both the conductor layers can be stabilized by making the area of the minimum unit of the overlapping portion of the first and the second conductor layers 2 and 3 and the porous layer 1 to which the voltage is applied. It is preferable that the area of the minimum unit of the aforesaid overlapping portion is 25 $mm^2$ or smaller in order to stabilize the aforesaid voltage.

In order to decrease the area of the minimum unit of the aforesaid overlapping portion, at least one selected from the first conductor layer 2, the second conductor layer 3 and the porous layer 1 can be formed into a predetermined pattern. As the pattern, a simple matrix type pattern can be cited. For example, the first conductor layer 2 and the second conductor layer 3 are formed into the stripe shape parallel to the X-axis and the Y-axis respectively, and can be disposed to cross each other.

In the case where the first conductor layer 2 and/or the second conductor layer 3 are/is patternized as described above, there is the advantage of making it possible to adjust the electron emission region and control the amount of emission of electrons, and this case is preferable for the display of the type using the cathode with a small area such as the display and the cathode ray tube of the type which is driven by applying voltage to the individual electron emission sources in sequence.

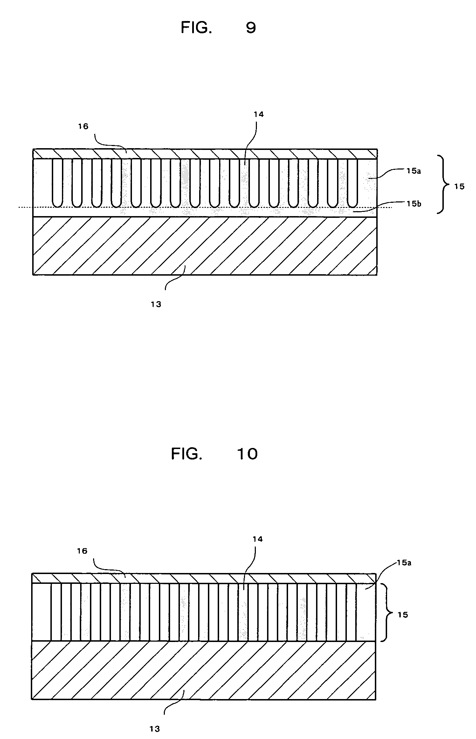

Next, an FED including such an electron source device will be explained based on Fig. 8.

The FED includes the rear plate 7 and the face plate 8 respectively having rectangular glass substrates, and these plates are placed to oppose each other with a predetermined space therebetween. The rear plate 7 and the face plate 8 have their peripheral end portions joined to each other through a side wall 9 in a rectangular frame shape made of glass to form a vacuum envelope.

A phosphor screen 10 is formed on an inner surface of the face plate 8. In the phosphor screen 10, phosphor layers of three colors of red (R), blue (B) and green (G) formed in a stripe form or a dot form and a light absorption layer made of black pigment are arranged in predetermined configurations respectively. A metal back layer 11 that is the third electrode (anode electrode) is formed on the phosphor screen 10. A counter electrode (not shown) made of, for example, ITO can be formed between the phosphor screen 10 and the face plate 8, and this can be made the anode electrode.

In the formation of the phosphor screen 10, the light absorption layer can be formed by photolithography or the like. Formation of the phosphor layers of three colors of red (R), blue (B) and green (G) can be performed by a slurry method using phosphor solutions of ZnS base, $Y_2O_3$ base, $Y_2O_2S$ base and the like. The phosphor layer of each color can be formed by a spray method or a printing method, and in these methods, patterning by photolithography can be used in combination as necessary.

An electron source device 12 of the first embodiment is provided on an inner surface of the rear plate 7. The electron source device 12 is placed with the second conductor layer 3 which emits the electron beams (shown by the arrows) outside the electron source device on an inner side (facing to the phosphor screen 10).

The side wall 9 is attached to a peripheral edge portion of the rear plate 7 and a peripheral edge portion of the face plate 8 by frit glass, for example, and the inside of the envelope constituted by the rear plate 7, the face plate 8 and the side wall 9 is substantially kept in vacuum. Further, a number of spacers (not shown) are disposed between the rear plate 7 and the face plate 8 at predetermined spaces to keep the clearance between these plates. The spacers are each formed into a plate shape or a columnar shape.

According to such an FED, in the electron source device, the electrons which are emitted to penetrate through the second conductor layer 3 by application of voltage between the first conductor layer 2 that is the reference electrode and the second conductor layer 3 that is the gate electrode are accelerated by the voltage (anode voltage) applied to the third electrode (metal back layer 11) provided on the phosphor screen 10 and collide against the phosphor layer. As a result, the phosphor is excited and emitted, and a desired image is displayed.

The present invention is not limited to the aforementioned embodiments, and various modifications are possible within the range of this invention.

Hereinafter, an example of the present invention will be explained.

Example

After the Al substrate (the first Al substrate) 50 mm long by 50 mm broad and 2.5 mm thick was cleaned with methanol and oil was removed, the Al substrate was immersed in a bath of a phosphoric acid solution (four weight% of phosphoric acid concentration) kept at 20°C. Subsequently, the second Al substrate was used as the opposition electrode, and anodic oxidation was performed by changing the applied voltage (anodic oxidation voltage) and time (anodic oxidation time) as shown in Table 1, whereby the porous alumina layer (anodic oxidation layer) having nanoholes was formed (specimens No. 1 to 23).

After anodic oxidation was performed at the applied voltage of 65 V, the anodic oxidation voltage was gradually lowered to dissolve the barrier layer, and thereby, the anodic oxidation layer in which the nanoholes practically penetrate through the porous alumina layer with the thickness of the barrier layer of 10 nm or less was formed (specimens No. 24 to 29).

In the porous alumina layer having the nanoholes thus formed, the thickness of the nanohole formation part, and the thickness of the barrier layers made of alumina, which were formed at the bottom end parts of the nanoholes were respectively measured. The measurement result is shown in Table 1 with the conditions of the anodic oxidation.

[Table 1]

| | | Anodic Oxidation Voltage (V) | Anodic Oxidation Time (min) | Porous Alumina Layer (Nanohole Formation Part) Thickness (μm) | Barrier Layer Thickness (nm) |
|---|---|---|---|---|---|
| Specimen | No. 1 | 35 | 20 | 0.4 | 50 |
| | No. 2 | 35 | 45 | 1.8 | 50 |
| | No. 3 | 35 | 90 | 4.8 | 50 |
| | No. 4 | 35 | 120 | 7.5 | 50 |
| | No. 5 | 35 | 180 | 14.2 | 50 |
| | No. 6 | 35 | 240 | 23.3 | 50 |
| | No. 7 | 65 | 20 | 0.3 | 70 |
| | No. 8 | 65 | 45 | 1.3 | 70 |
| | No. 9 | 65 | 90 | 4.3 | 70 |
| | No. 10 | 65 | 120 | 7.0 | 70 |
| | No. 11 | 65 | 180 | 14.1 | 70 |
| | No. 12 | 95 | 20 | 0.2 | 100 |
| | No. 13 | 95 | 45 | 1.0 | 100 |
| | No. 14 | 95 | 90 | 3.8 | 100 |
| | No. 15 | 95 | 120 | 6.5 | 100 |
| | No. 16 | 115 | 20 | 0.2 | 110 |
| | No. 17 | 115 | 45 | 0.8 | 110 |
| | No. 18 | 115 | 90 | 3.4 | 110 |
| | No. 19 | 115 | 120 | 6.2 | 110 |
| | No. 20 | 130 | 20 | 0.1 | 120 |
| | No. 21 | 130 | 45 | 0.7 | 120 |
| | No. 22 | 130 | 90 | 3.2 | 120 |
| | No. 23 | 130 | 120 | 6.0 | 120 |
| | No. 24 | 65→0 | 20 | 1.1 | 0 to 10 |
| | No. 25 | 65→0 | 45 | 2.1 | 0 to 10 |
| | No. 26 | 65→0 | 90 | 4.9 | 0 to 10 |
| | No. 27 | 65→0 | 120 | 8.0 | 0 to 10 |
| | No. 28 | 65→0 | 180 | 14.8 | 0 to 10 |
| | No. 29 | 65→0 | 240 | 23.5 | 0 to 10 |

Next, by sputtering Au on the anodic oxidation layer (porous alumina layer), the pattern of the Au thin film (thickness of about 40 nm) of 10 mm long by 1 mm wide (area of 0.1 cm$^2$) was formed.

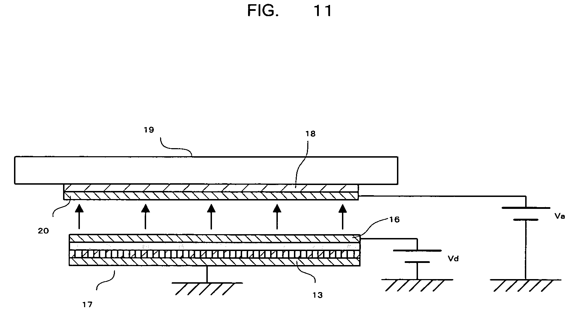

Thus, the electron source having the Al substrate 13 which was the first conductor layer and left without being anodized, the porous alumina layer 15 having a number of nanoholes 14 formed on the Al plate 13, and the pattern 16 of the Au thin film which was the second conductor layer formed on the porous alumina layer 15 was obtained. In the electron source shown in Fig. 9, the porous alumina layer 15 has the porous part 15a in which the nanoholes 14 are formed, and the barrier layer 15b composed of alumina which was formed at the bottom end portions of the nanoholes 14, but in the electron source having the structure in which the nanoholes 14 practically penetrate through the porous alumina layer 15 (Fig. 10), the barrier layer 15b does not exist, and the porous alumina layer 15 is composed of only the porous part 15a.

Next, as shown in Fig. 11, the substrate (rear plate) 17 including the electron source obtained in this example, and the substrate (face plate) 19 on which the phosphor screen 18 was formed were disposed to be opposed to each other with a space (gap) of 2 mm therebetween so that the pattern 16 of the Au thin film which was the second conductor layer and the phosphor screen 18 are opposed to each other, and were kept under the vacuum atmosphere. Reference numeral 20 in the drawing denotes the metal back layer which is the third electrode.

The phosphor screen 18 was made according to the following procedure. After the light absorption layer in the grid matrix form with graphite as the main component was formed on the glass substrate 50 mm long by 50 mm broad by the photolithography, each of the phosphor layers of red ($Y_2O_2S$: Eu), green (ZnS: Cu, Al), blue (ZnS: Ag, Al) which are regularly arranged was formed in the clearance part of the light absorption layer by the photolithography. Next, the film made of nitrocellulose was formed on the phosphor layer, and aluminum was prepared thereon by vapor deposition, whereby the metal back layer 20 was formed.

Assembly of the rear plate 17 and the face plate 19 were performed according to the following procedure. First, the hole was formed at the desired position of the electron source other than the image effective surface, and the exhaust pipe was joined by the frit glass. Thereafter, the glass frame which was the spacer for gap control was placed on the electron source, and the face plate 19 was placed thereon, so that the pattern 16 of the Au thin film which was the second conductor layer and the phosphor screen 18 were opposed to each other through the glass frame. After positioning was performed so that the individual electron emission regions of the electron source correspond to the phosphor surface pixels, they were joined to each other by the frit glass to form the envelope. The envelope was exhausted through the exhaust pipe while heating at 300°C, and when the degree of vacuum of $1 \times 10^{-3}$ to $5 \times 10^{-3}$ Pa was achieved, the exhaust pipe was sealed.

In the display thus obtained, the Al plate 13 which was the first conductor layer and was left without being anodized was set as the cathode electrode (reference electrode), the Au thin film pattern 16 was set as the gate electrode, and direct-current voltage of 100 V or lower (drive voltage: Vd) was applied between these electrodes. The current value flowing between the electrodes was measured. The voltage of the third electrode (anode voltage: Va) was set at 5 kV, the value of the drive voltage was changed, and the luminous state of the phosphor screen was observed, whereby the presence or absence of the electron emission was examined. Then, the electron emission starting voltage, the current value (I) flowing between the first conductor layer and the second conductor layer, and the dielectric breakdown voltage were respectively measured. The current density (I/S) was obtained. The value of S was equal to the area of the Au thin film pattern and 0.1 cm$^2$. The measurement result is shown in Table 2.

[Table 2]

| | | Emission Starting Minimum Current Density (µA/cm$^2$) | Emission Starting Voltage (V) | Dielectric Breakdown Voltage (V) |
|---|---|---|---|---|
| Specimen | No. 1 | 53 | 1 | 16 |
| | No. 2 | 42 | 4 | 48 |
| | No. 3 | 33 | 8 | 100 or higher |
| | No. 4 | 20 | 10 | 100 or higher |
| | No. 5 | Not Emit | - | - |
| | No. 6 | Not Emit | - | - |
| | No. 7 | 44 | 5 | 33 |
| | No. 8 | 28 | 9 | 55 |
| | No. 9 | 11 | 45 | 75 |
| | No. 10 | Not Emit | - | - |
| | No. 11 | Not Emit | - | - |
| | No. 12 | 23 | 10 | 26 |
| | No. 13 | Not Emit | - | - |
| | No. 14 | Not Emit | - | - |
| | No. 15 | Not Emit | - | - |

[Table 2]   (continued)

|  |  | Emission Starting Minimum Current Density ($\mu$A/cm$^2$) | Emission Starting Voltage (V) | Dielectric Breakdown Voltage (V) |
|---|---|---|---|---|
|  | No. 16 | 13 | 23 | 34 |
|  | No. 17 | Not Emit | - | - |
|  | No. 18 | Not Emit | - | - |
|  | No. 19 | Not Emit | - | - |
|  | No. 20 | Not Emit | - | - |
|  | No. 21 | Not Emit | - | - |
|  | No. 22 | Not Emit | - | - |
|  | No. 23 | Not Emit | - | - |
|  | No. 24 | 41 | 5 | 25 |
|  | No. 25 | 38 | 7 | 61 |
|  | No. 26 | 30 | 9 | 100 or higher |
|  | No. 27 | 21 | 12 | 100 or higher |
|  | No. 28 | 10 | 16 | 100 or higher |
|  | No. 29 | Not Emit | - | - |

From the measurement result of Table 2, the following were confirmed. Namely, in each of the displays including the electron sources of the specimens No. 1 to 4, 7 to 9, 12 and 16, and the specimens No. 24 to 28 with the values of the current densities (I/S) flowing between the Al plate of the first conductor layer and the Au thin film pattern of the second conductor layer being in the range of 1 $\mu$A/cm$^2$ to 100 mA/cm$^2$, emission of electrons was obserbed at the low voltage of 50 V or lower, and the favorable luminous state was obtained. The dielectric breakdown voltage was high, and withstanding voltage characteristic was sufficiently satisfactory.

Industrial Applicability

As explained above, according to the present invention, the electron source device which has uniform and favorable electron emission performance, has long life even at a low degree of vacuum can be obtained at low cost. The display including this electron source device can be high in emission efficiency at low cost and reliability.

**Claims**

1.   An electron source device, comprising:

a porous layer composed of an insulator, and having a number of microscopic holes placed in a perpendicular direction to a main surface; and
a first conductor layer and a second conductor layer respectively placed on both surface sides of the porous layer,

wherein a current density I/S when a direct-current voltage is applied between the second conductor layer and the first conductor layer with the second conductor layer as an anode is in a range shown as follows:

$$1 \ \mu\text{A/cm}^2 \leq \text{I/S}$$

(where I represents a current value flowing between the first conductor layer and the second conductor layer, S represents an area of a part where three layers that are the first conductor layer, the second conductor layer and the porous layer overlap in a thickness direction.)

2. The electron source device as set forth in claim 1, wherein the current density I/S is in a range shown as follows:

$$1 \ \mu A/cm^2 \leq I/S \leq 100 \ mA/cm^2$$

3. The electron source device as set forth in claim 1, wherein the porous layer having the microscopic holes is a porous alumina layer.

4. The electron source device as set forth in claim 3, wherein the porous alumina layer is a layer formed by anodic oxidation of a layer with aluminum as a main component.

5. The electron source device as set forth in claim 1, wherein a diameter of the microscopic hole of the porous layer is 5 nm to 1000 nm.

6. The electron source device as set forth in claim 1, wherein a thickness of the porous layer is 0.05 $\mu$m to 50 $\mu$m.

7. The electron source device as set forth in claim 1, further comprising a conductor or semiconductor layer formed in the microscopic hole of the porous layer.

8. The electron source device as set forth in claim 1, wherein at least one layer selected from the first conductor layer, the second conductor layer and the porous layer is patternized.

9. The electron source device as set forth in claim 1, wherein at least one of the first conductor layer and the second conductor layer has a plurality of conductor layers.

10. The electron source device as set forth in claim 8, wherein the area of a minimum unit of the part where three layers that are the first conductor layer, the second conductor layer and the porous layer overlap in the thickness direction is 25 mm$^2$ or less.

11. An electron source device, comprising:

a porous layer composed of an insulator, and having a number of microscopic holes placed in a perpendicular direction to a main surface; and
a first conductor layer and a second conductor layer respectively placed on both surface sides of the porous layer,

wherein end portions of at least one side of the microscopic holes of the porous layer and the first conductor layer or second conductor layer are separated by a barrier layer composed of a dielectric, and
a current density I/S when a direct-current voltage is applied between the second conductor layer and the first conductor layer with the second conductor layer as an anode is in a range shown as follows:

$$1 \ \mu A/cm^2 \leq I/S$$

(where I represents a current value flowing between the first conductor layer and the second conductor layer, S represents an area of a part where three layers that are the first conductor layer, the second conductor layer and the porous layer overlap in a thickness direction.)

12. The electron source device as set forth in claim 11, wherein the current density I/S is in a range shown as follows:

$$1 \ \mu A/cm^2 \leq I/S \leq 100 \ mA/cm^2$$

13. The electron source device as set forth in claim 11, wherein the microscopic holes of the porous layer have openings on at least one side of the first conductor layer side and the second conductor layer side, and has a barrier layer composed of a dielectric formed to close end portions at an opposite side of the microscopic holes.

14. The electron source device as set forth in claim 11, wherein the porous layer having the microscopic holes is a

EP 1 566 823 A1

porous alumina layer.

**15.** The electron source device as set forth in claim 14, wherein the porous alumina layer is a layer formed by anodic oxidation of a layer with aluminum as a main component.

**16.** The electron source device as set forth in claim 11, wherein a diameter of the microscopic hole of the porous layer is 5 nm to 1000 nm.

**17.** The electron source device as set forth in claim 11, wherein a thickness of the porous layer is 0.05 $\mu$m to 50 $\mu$m.

**18.** The electron source device as set forth in claim 11, further comprising a conductor or semiconductor layer formed in the microscopic hole of the porous layer.

**19.** The electron source device as set forth in claim 11, wherein the barrier layer has a layer composed of a same kind of insulator as the insulator constructing the porous layer.

**20.** The electron source device as set forth in claim 11, wherein the barrier layer has a layer composed of a different kind of dielectric from the insulator constructing the porous layer.

**21.** The electron source device as set forth in claim 11, wherein a thickness of the barrier layer is 5 nm to 50 nm.

**22.** The electron source device as set forth in claim 11, wherein at least one layer selected from the first conductor layer, the second conductor layer and the porous layer is patternized.

**23.** The electron source device as set forth in claim 11, wherein at least one of the first conductor layer and the second conductor layer has a plurality of conductor layers.

**24.** The electron source device as set forth in claim 22, wherein the area of a minimum unit of the part where three layers that are the first conductor layer, the second conductor layer and the porous layer overlap in the thickness direction is 25 mm$^2$ or less.

**25.** A display device comprising:

a first substrate and a second substrate placed to be opposed to each other;
a phosphor layer formed on an inner surface of the first substrate; and
an electron source provided on an inner surface side of the second substrate and including an electron source emitting electrons exciting the phosphor layer,

wherein the electron source is the electron source device as set forth in any one of claims 1 to 24.

# FIG.1

# FIG.2

FIG.      3

FIG.      4

FIG. 5

FIG. 6

FIG.    7

FIG.    8

FIG.    9

FIG.    10

FIG.    11

| INTERNATIONAL SEARCH REPORT | International application No. |
|---|---|
| | PCT/JP03/14980 |

**A. CLASSIFICATION OF SUBJECT MATTER**
    Int.Cl$^7$  H01J1/30, H01J29/04, H01J31/12

According to International Patent Classification (IPC) or to both national classification and IPC

**B. FIELDS SEARCHED**

Minimum documentation searched (classification system followed by classification symbols)
    Int.Cl$^7$  H01J1/30, H01J29/04, H01J31/12

Documentation searched other than minimum documentation to the extent that such documents are included in the fields searched
    Jitsuyo Shinan Koho          1922-1996   Jitsuyo Shinan Toroku Koho    1996-2004
    Kokai Jitsuyo Shinan Koho    1971-2004   Toroku Jitsuyo Shinan Koho    1994-2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | EP 923104 A2  (CANON KABUSHIKI KAISHA), 16 June, 1999 (16.06.99), | 1-8,10-19, 21,22,24,25 |
| Y | Full text; all drawings & US 2002/153828 A1    & US 6472814 B1 & JP 2000-188058 A | 9,20,23 |
| Y | JP 11-204024 A  (Hitachi, Ltd.), 30 July, 1999 (30.07.99), Full text; all drawings (Family: none) | 9,23 |
| Y | JP 2000-030603 A  (Hitachi, Ltd.), 28 January, 2000 (28.01.00), Full text; all drawings (Family: none) | 20 |

☐  Further documents are listed in the continuation of Box C.     ☐  See patent family annex.

| | |
|---|---|
| * Special categories of cited documents: <br> "A" document defining the general state of the art which is not considered to be of particular relevance <br> "E" earlier document but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| 12 February, 2004 (12.02.04) | 24 February, 2004 (24.02.04) |

| Name and mailing address of the ISA/ | Authorized officer |
|---|---|
|     Japanese Patent Office | |
| Facsimile No. | Telephone No. |

Form PCT/ISA/210 (second sheet) (July 1998)